# FASCICULE DE BREVET EUROPEEN

(11) **EP 0 604 617 B1**
(45) Date de publication et mention de la délivrance du brevet: **03.09.1997**
(21) Numéro de dépôt: 93914816.9
(22) Date de dépôt: 05.07.1993
(51) Int. Cl.: A47J 36/02, A47J 27/088

(54) **USTENSILE CULINAIRE A FOND THERMOCONDUCTEUR**
KÜCHENGESCHIRR MIT WÄRMELEITENDEM BODEN
THERMOCONDUCTIVE-BASED COOKING VESSEL

(30) Priorité: 06.07.1992 FR 9208346
(43) Date de publication de la demande: 06.07.1994
(73) Titulaire: SEB S.A., 69130 Ecully (FR)
(72) Inventeur: CAPELLE, Jean-Claude, F-21560 Arc-sur-Tille (FR); LIGNY, Jean-Jacques, F-21370 Velars-sur-Ouche (FR)
(86) Numéro de dépôt international: FR9300692
(87) Numéro de publication internationale: WO9401030

(56) Documents cités:
- EP-A- 0 509 860
- BE-A- 407 876
- DE-A- 3 713 660
- DE-C- 715 630
- DE-C- 900 989
- DE-U- 9 111 901
- GB-A- 2 014 037
- PATENT ABSTRACTS OF JAPAN vol. 10, no. 333 (M-534)(2389) 12 Novembre 1986 & JP A 61 138 053 (YOSHINO RIKA KOGYO K.K.)

## Description

### DOMAINE TECHNIQUE

La présente invention se rapporte au domaine technique général des ustensiles culinaires comportant un fond thermoconducteur destiné à être chauffé, en particulier par induction.

La présente invention se rapporte à un ustensile culinaire tous feux, plus précisément à un récipient culinaire comportant un fond thermoconducteur destiné à être chauffé, en particulier par induction, ledit fond comprenant en association une plaque d'un métal bon conducteur de chaleur qui est revêtue d'une feuille métallique pourvue de perforations, ladite feuille servant en outre à la génération de courants induits.

### TECHNIQUE ANTERIEURE

Il a déjà été proposé, par exemple dans la demande de brevet FR-A-2415444 de réaliser un récipient en acier inoxydable comportant un fond thermoconducteur en aluminium et/ou en alliage de ce métal. Un tel récipient est à même d'être chauffé par différents types de sources de chaleur, que ce soit à l'aide de moyens de chauffage par gaz, plaque électrique ou même par induction. Le récipient obtenu comporte au moins une et de préférence deux couches d'aluminium, ou d'un alliage renfermant ce métal, et une plaque d'acier laminé ou de fer ancrée à la couche d'aluminium ou insérée entre les deux couches d'aluminium. Avantageusement, la plaque d'acier laminé de fond est magnétisée de manière à pouvoir chauffer le récipient à l'aide de courants induits. La plaque de fer laminé est pourvue de perforations qui peuvent être constituées de simples trous ou d'ouvertures présentant un contour ondulé ou en zigzag, les perforations étant destinées à permettre lors de la réalisation du fond, le fluage de l'aluminium. On réalise ainsi une liaison métallique directe entre les deux couches d'aluminium.

Il doit être considéré que les récipients réalisés selon la technique mentionnée précédemment, donnent des résultats convenables. En revanche, ce type de récipient ne résout pas complètement le problème connu des dilatations et/ou déformations survenant au niveau du fond. En effet l'action thermique des moyens de chauffage conduit d'autant plus facilement à des dilatations ou déformations nuisibles que le fond comporte plusieurs couches de matériaux de composition distinctes. On constate ainsi à la longue une déformation des récipients et en particulier un décollement des couches thermoconductrices ou bien même des ruptures partielles dans la continuité métallique entre la ou les couches d'aluminium et la plaque d'acier laminé. La conductibilité thermique du récipient s'en trouve affectée, ce qui conduit de manière générale à un rendement thermique réduit, et à un temps de cuisson allongé. Dans le cas spécifique des récipients comportant un fond magnétique, on constate en outre une rupture partielle de la continuité des courants induits générés dans la plaque d'acier, ce qui conduit à une mauvaise transmission de chaleur.
Le document DE-A-3713660 décrit un ustensile culinaire selon le préambulaire de la revendication 1.

### EXPOSE DE L'INVENTION

L'objet de l'invention vise en conséquence à résoudre les différents inconvénients nommés précédemment et en particulier à fournir un ustensile culinaire apte à être chauffé de préférence par induction, et possédant une résistance améliorée aux dilatations et/ou déformations tout en maintenant une bonne continuité des courants induits dans le fond.

Un autre objet de l'invention vise à fournir un ustensile culinaire présentant une homogénéité de liaison améliorée entre les différentes couches constituant le fond.

Les objets assignés à l'invention sont atteints à l'aide d'un ustensile culinaire comportant un fond thermoconducteur destiné à être chauffé, en particulier par induction, ledit fond comprenant de l'intérieur vers l'extérieur au moins une plaque d'un métal bon conducteur de chaleur et au moins une feuille métallique pourvue de perforations, ladite feuille étant encastrée dans la plaque de manière que ses perforations soient remplies par le métal de la plaque, caractérisé en ce que les perforations présentent une surface cumulée représentant entre 5 % et 20 % de la surface totale de la feuille, et de préférence entre 15 et 20 %.

### DESCRIPTION SOMMAIRE DES DESSINS

D'autres particularités et avantages de l'invention apparaitront et ressortiront plus en détail, à la lecture de la description faite ci-après, en référence aux dessins annexés donnés à titre d'exemples illustratifs non limitatifs, dans lesquels :
- La figure 1 représente selon une coupe transversale partielle, un ustensile culinaire conforme à l'invention.
- La figure 2 présente selon une vue de dessous, le fond d'une première variante de réalisation d'un ustensile culinaire conforme à l'invention.
- La figure 3 représente selon une vue de dessous partielle une seconde variante de réalisation d'un ustensile culinaire conforme à l'invention.
- La figure 4 représente selon une vue de dessous partielle le fond d'une troisième variante de réalisation conforme à l'invention.

### MANIERE DE REALISER L'INVENTION

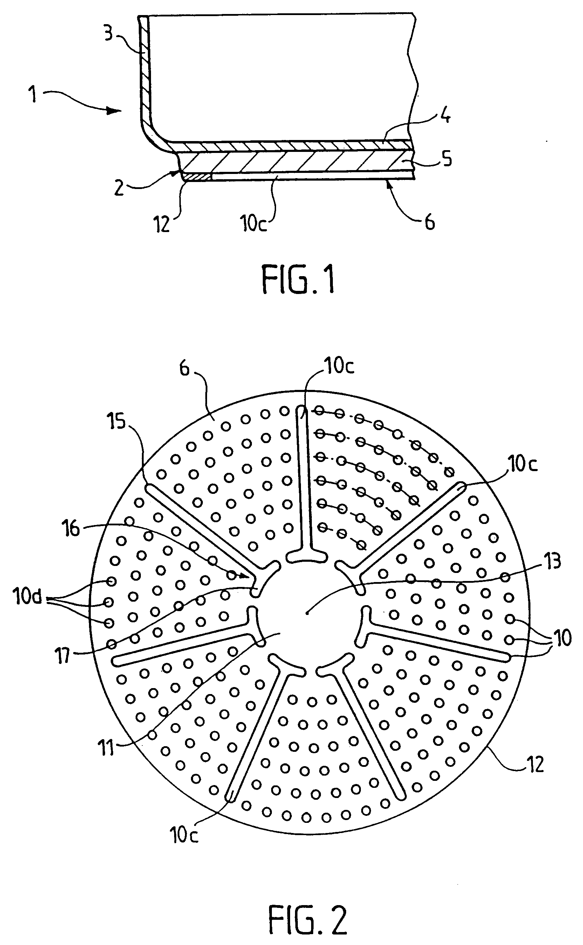

La figure 1 montre selon une coupe transversale partielle un ustensile culinaire constitué d'un récipient 1 de toute forme appropriée, et par exemple de forme sensiblement cylindrique, comportant un fond thermoconducteur 2 à partir duquel s'élèvent les parois 3 du récipient 1. Le fond thermoconducteur 2, de forme géométrique quelconque, de préférence circulaire, est constitué d'une structure sandwich comportant de l'intérieur vers l'extérieur une succession d'éléments, en partant d'une couche supérieure 4, par exemple en acier inoxydable prolongeant les parois latérales 3 et formant la pièce sur laquelle les aliments sont destinés à reposer. La face inférieure de la couche supérieure 4 est recouverte d'une plaque 5 d'un métal bon conducteur de chaleur, tel que de l'aluminium. La partie externe du fond thermoconducteur 2 destinée à venir en contact avec le moyen de chauffe est constituée par une feuille métallique 6 par exemple en acier inoxydable, et de préférence magnétique de manière à constituer une feuille de raidissement par exemple ferromagnétique susceptible de générer un courant induit.

La feuille métallique 6 est pourvue tel que cela est montré aux figures 2 à 4 de perforations 10 réparties régulièrement ou non sur la surface de la feuille métallique 6, afin d'assurer le fluage du matériau constituant la plaque métallique 5 à l'intérieur des perforations 10, lors de la réalisation de la structure sandwich. La feuille métallique 6 est fixée sur la plaque métallique 5 par tous procédés permettant l'encastrement au moins partiel de la feuille 6 dans ladite plaque 5. Avantageusement, le fond thermoconducteur sera réalisé à l'aide d'un procédé incluant une étape de matriçage par frappe à chaud tel que cela est décrit dans la demande de brevet français n° 9103695, déposée le 27 mars 1991 au nom du même demandeur.

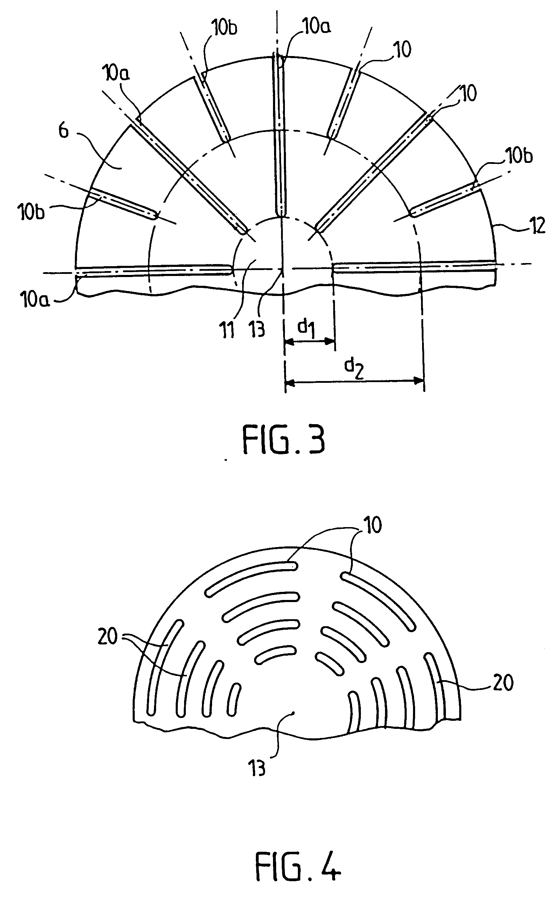

Le récipient culinaire 1 montré à la figure 3 comporte une feuille métallique 6 pourvue de perforations 10 s'étendant radialement à partir d'une zone géométrique centrale 11 en direction de la périphérie 12 du fond thermoconducteur 2. Dans la variante de réalisation montrée à la figure 3, la zone géométrique centrale 11 est circulaire et les fentes radiales 10 s'étendent à distance du centre 13 de la dite zone jusqu'à la périphérie 12. De préférence les fentes radiales 10 sont constituées de deux groupes distincts de fentes qui se différencient par leur longueur, à savoir un premier groupe de fentes radiales 10a s'arrêtant à une distance d1 du centre géométrique 13 qui est différente et inférieure à la distance d2 séparant l'extrémité proximale d'un second groupe de fentes radiales 10b. Dans la variante de réalisation montrée à la figure 3 la distance d1 est de l'ordre de 25 millimètres et correspond au rayon du cercle formant la zone géométrique centrale 11, alors que la distance d2 est de l'ordre de 67 millimètres, le diamètre total du fond thermoconducteur 2 étant de l'ordre de 204 millimètres. Avantageusement, comme cela est visible à la figure 3 les fentes radiales 10a, 10b de chaque groupe distinct sont disposées en alternance sur la surface du fond thermoconducteur 2 de telle façon que chaque fente radiale 10a ou 10b est encadrée par deux fentes radiales de l'autre groupe. Avantageusement également, les fentes radiales 10a et 10b sont au nombre respectivement de huit, équidistantes et espacées chacune au sein de chaque groupe d'un angle de 45 degrés.

Il s'avère particulièrement important en vue d'assurer une bonne solidarisation entre la plaque métallique 5 et la feuille métallique 6, sans pour autant limiter de manière sensible l'activité des courants induits, de réaliser une feuille métallique 6 dont la surface cumulée des perforations 10 représente entre 5 % et 20 % de la surface totale de ladite feuille. De préférence la surface cumulée totale des perforations 10 sera comprise entre 15 % et 20 % de la surface totale de la feuille métallique 6. En respectant les ratios précédemment mentionnés et quel que soit le nombre, la disposition et la forme particulière des perforations 10 les risques de dilatation et/ou déformation sont limités, et la continuité des courants induits générés, peut être maintenue. Dans le cas où le fond thermoconducteur 2 ne comporte que des fentes radiales 10a, 10b, 10c, la surface cumulée desdites fentes sera comprise entre 5 % et 20 % de la surface totale de la feuille métallique 6, et de préférence entre 5 et 10 %.

La variante de réalisation montrée à la figure 2 comporte en association, une série de fentes radiales 10c, ainsi qu'une série d'orifices 10d, de préférence circulaires, répartis sensiblement régulièrement entre les secteurs délimités par deux fentes radiales 10. La surface cumulée des orifices 10d représente entre 5 % et 10 % de la surface totale de la face interne de la feuille 6, et de préférence entre 8 et 10 %. Dans un exemple pratique de réalisation, et pour une surface donnée du fond thermoconducteur, la surface des perforations 10 atteint 18 %, les fentes radiales 10c représentent 8 % de la surface totale, et les orifices 10d, 10 %. Dans un autre exemple de réalisation, pour une surface du fond 2 plus importante, les perforations 10 représentent 15 % de la surface totale, les fentes radiales 10c représentent 6.5 % de la surface totale, et les orifices 10d, 8.5 %.

Dans l'exemple de réalisation montré à la figure 2 l'ustensile culinaire conforme à l'invention comporte un fond thermoconducteur 2 pourvu d'au moins trois et de préférence sept lentes radiales 10c dont chaque extrémité distales 15 est située à distance de la périphérie 12. De préférence cette distance est constante pour chaque lente radiale 10c. Chaque extrémité proximale 16 des fentes radiales 10d définit une jambe 17 située à distance du centre géométrique 13 et s'étendant sensiblement orthogonalement à la partie radiale de la lente 10c pour former une lente en T. De préférence chaque jambe 17 est courbe et forme un arc de cercle centré sur le centre géométrique 13. Avantageusement, l'ensemble des jambes 17 est situé sur un même cercle.

Dans chaque secteur délimité par deux lentes radiales 10 adjacentes, les orifices 10d sont répartis en au moins trois et de préférence six rangs d'orifices. Selon une réalisation particulièrement avantageuse les orifices d'un même rang sont alignés sur un cercle centré sur le centre géométrique 13, chaque rang étant donc situé sur un cercle de diamètre croissant selon la direction centrifuge. De manière également avantageuse les distances inter-rang et inter-orifice, de même que la distance entre les orifices 10d et les lentes radiales 10 sont constantes et de préférence identiques.

Il est bien évident que diverses configurations géométriques sont envisageables sans pour autant sortir du cadre de l'invention. En particulier il est possible de réaliser des orifices 10b de diamètre constant, par exemple de l'ordre de 3,5 millimètres ou de diamètre variable suivant leur position radiale. Ainsi selon une version avantageuse non représentée sur les figures, il est possible de faire varier le diamètre des orifices 10d d'un rang à l'autre et avantageusement de manière croissante en partant du rang le plus proche des jambes 17. Dans une telle réalisation et en considérant par exemple huit rangs d'orifices 10b, les diamètres des orifices 10d de chaque rang pris deux à deux, peuvent être de l'ordre de 2,6 millimètres, 3 millimètres, 3,4 millimètres et 3,8 millimètres.

Dans la réalisation préférentielle montrée à la figure 2 le nombre d'orifice 10d par rang et par secteur croît de préférence régulièrement en fonction de l'éloignement du rang par rapport au centre géométrique 13. Dans l'exemple montré à la figure 2 la croissance est de l'ordre de un orifice 10d supplémentaire par rang.

La variante de réalisation montrée à la figure 4 ne diffère des variantes précédentes par la forme des perforations 10 qui sont constituées par une série de lentes courbes 20. Dans la réalisation montrée à la figure 4 les lentes courbes 20 présentent leur concavité tournée vers le centre géométrique 13 et forment chacune un arc de cercle centré sur ledit centre. Les lentes courbes 20 sont disposées en alignement sur des cercles concentriques, de préférence équidistants au nombre de quatre et espacées entre elles radialement et circonférenciellement de manière à former une pluralité de secteurs. A partir du centre de chaque secteur, les lentes courbes présentent donc une longueur circonférencielle croissante selon leur position plus ou moins excentrée par rapport au centre géométrique 13.

L'ustensile culinaire tous feux conforme à l'invention et en particulier le récipient culinaire obtenu présente du fait de la maitrise de la géométrie et de la dimension des perforations de bonnes propriétés de résistance aux dilatations et/ou déformations. En effet la maitrise de ces paramètres permet lors de la fabrication du fond thermoconducteur, un fluage homogène de l'aluminium dans le volume défini par les perforations, qu'elles soient radiales, courbes ou circulaires et évite au moment de l'étape de frappe, la formation d'une flèche incontrolée. Ces propriétés avantageuses sont obtenues sans limiter d'aucune manière le passage et la formation de courants induits, ce qui permet l'obtention d'un ustensile culinaire ayant une bonne résistance aux déformations, une bonne conductivité thermique et par conséquent un bon rendement thermique.

Dans tous les exemples représentés, la largeur moyenne des lentes radiales ou courbes peut être de l'ordre de 4 millimètres.

L'ustensile culinaire conforme à l'invention est constitué de préférence d'un récipient culinaire, et en particulier d'un autocuiseur, mais il est bien évident que tout autre type d'ustensile culinaire étant destiné à comporter un fond thermoconducteur analogue à celui décrit précédemment est compris dans le champ couvert par l'invention.

### POSSIBILITES D'APPLICATION INDUSTRIELLE

L'invention trouve son application dans la réalisation de fonds thermoconducteurs d'ustensiles culinaires tous feux et/ou pour chauffage inductif, tels que des poêles, des autocuiseurs, des casseroles ou des articles similaires.

## Revendications

1. Ustensile culinaire comportant un fond thermoconducteur (2) destiné à être chauffé, en particulier par induction, ledit fond (2) comprenant de l'intérieur vers l'extérieur au moins une plaque (5) d'un métal bon conducteur de chaleur et au moins une feuille métallique (6) pourvue de perforations (10), ladite feuille (6) étant encastrée dans la plaque (5) de manière que ses perforations (10) soient remplies par le métal de la plaque, caractérisé en ce que les perforations (10) présentent une surface cumulée représentant entre 5 % et 20 % de la surface totale de la feuille, et de préférence entre 15 et 20 %.

2. Ustensile selon la revendication 1 caractérisé en ce que les perforations (10) sont constituées de lentes (10a, 10b, 10c) dont la surface cumulée représente entre 5 et 20 % de la surface totale de la feuille et de préférence entre 5 et 10 %.

3. Ustensile selon la revendication 2 caractérisé en ce que les lentes (10) sont des lentes radiales (10a, 10b, 10c) et s'étendent, à partir d'une zone géométrique centrale (11) du fond (2), vers l'extérieur.

4. Ustensile selon la revendication 3 caractérisé en ce que les lentes radiales (10a, 10b, 10c) s'étendent à distance du centre (13) de la zone géométrique (11) centrale et jusqu'à la périphérie (12) du fond (2).

5. Ustensile selon la revendication 4 caractérisé en ce qu'il comporte :
- un premier groupe de lentes radiales (10a), de préférence au nombre de huit, qui s'arrêtent à une distance d1 du centre géométrique (13)
- un deuxième groupe de fentes radiales (10b), de préférence au nombre de huit, qui s'arrêtent à une distance d2 du centre géométrique (13), d2 étant différent de d1 et les lentes radiales (10a, 10b) de chaque groupe étant alternées.

6. Ustensile selon l'une des revendications 3 - 5 caractérisé en ce que les perforations (10) comportent également une série d'orifices (10d), de préférence circulaires, répartis sensiblement régulièrement entre les secteurs délimités par les lentes radiales (10a, 10b, 10c).

7. Ustensile selon la revendication 6 caractérisé en ce que la surface cumulée des orifices (10d) représente entre 5 % et 10 % de la surface totale de la feuille, et de préférence entre 8 et 10 %.

8. Ustensile selon les revendications 6 ou 7 caractérisé en ce qu'il comporte :
- au moins trois et de préférence sept lentes radiales (10c) dont chaque extrémité distale (15) est située à distance de la périphérie (12) du fond (2) et dont chaque extrémité proximale (16) défini une jambe (17) située à distance du centre géométrique (13) et s'étendant sensiblement orthogonalement à la partie radiale de la lente pour former une lente en T.
- au moins trois, et de préférence six rangs d'orifices répartis dans chaque secteur formé par deux fentes radiales (10c) adjacentes, chaque rang, étant situé à une distance différente du centre géométrique (13).

9. Ustensile selon la revendication 8 caractérisé en ce que :
- chaque jambe (17) est courbe et forme un arc de cercle centré sur le centre géométrique (13) du fond (2).
- chaque rang d'orifices (10c) est situé en partant du rang le plus proche de la jambe (17), sur un cercle, centré sur le centre géométrique (13), et de diamètre croissant.

10. Ustensile selon les revendications 8 ou 9 caractérisé en ce que les distances inter-rangs et inter-orifices sont constantes, et de préférence identiques.

11. Ustensile selon l'une des revendications 8 ou 9 caractérisé en ce que le nombre d'orifices (10d) par rang et par secteur croît de préférence régulièrement en fonction de l'éloignement du rang par rapport au centre géométrique (13).

12. Ustensile selon la revendication 1 caractérisé en ce que les perforations (10) sont constituées par une série de fentes courbes (20).

13. Ustensile selon la revendication 12 caractérisé en ce que les lentes courbes (20) présentent leur concavité tournée vers le centre géométrique (13) du fond (2) et forment une série d'arc de cercles centrés sur le centre géométrique (13) du fond (2).

14. Ustensile culinaire selon l'une des revendications précédentes caractérisé en ce qu'il est constitué par un récipient culinaire, en particulier un autocuiseur.

15. Ustensile culinaire selon l'une des revendications précédentes caractérisé en ce que la feuille métallique (6) est magnétisée.

## Claims

1. A cooking utensil including a heat-conducting bottom (2) designed to be heated, in particular by induction, said bottom (2) comprising, going from the inside to the outside, at least one plate (5) of a metal that is a good conductor of heat, and at least one metal sheet (6) provided with perforations (10), said sheet (6) being embedded in the plate (5) so that its perforations (10) are filled with the metal of the plate, said utensil being characterized in that the perforations (10) have a total area representing in the range 5% to 20% of the total area of the sheet, and preferably in the range 15% to 20%.

2. A utensil according to claim 1, characterized in that the perforations (10) are constituted by slots (10a, 10b, 10c) whose total area represents in the range 5% to 20% of the total area of the sheet, and preferably in the range 5% to 10%.

3. A utensil according to claim 2, characterized in that the slots (10) are radial slots (10a, 10b, 10c) and they extend outwardly from a central geometric zone (11) of the bottom (2).

4. A utensil according to claim 3, characterized in that the radial slots (10a, 10b, 10c) extend to the periphery (12) of the bottom (2) and to a distance from the center (13) of the geometric zone (11).

5. A utensil according to claim 4 characterized in that it is provided with:
a first group of radial slots (10a), preferably eight slots, which stop at a distance d1 from the geometric center (13); and
a second group of radial slots (10b), preferably eight slots, which stop at a distance d2 from the geometric center (13), d2 being different from d1, and the radial slots (10a, 10b) of each group being disposed alternately.

6. A utensil according to any one of claims 3 to 5, characterized in that the perforations (10) also include a series of preferably circular orifices (10d) distributed substantially uniformly over the sectors delimited by the radial slots (10a, 10b, 10c).

7. A utensil according to claim 6, characterized in that the total area of the orifices (10d) represents in the range 5% to 10% of the total area of the sheet, and preferably in the range 8% to 10%.

8. A utensil according to claim 6 or 7, characterized in that it is provided with:
at least three and preferably seven radial slots (10c), the outer end (15) of each slot being situated at a distance from the periphery (12) of the bottom (2), and the inner end (16) of each slot defining a segment (17) situated at a distance from the geometric center (13), and extending substantially orthogonally to the radial portion of the slot so as to form a T-shaped slot; and
at least three and preferably six rows of orifices distributed over each sector formed by two adjacent radial slots (10c), each row being situated at a different distance from the geometric center (13).

9. A utensil according to claim 8, characterized in that:
each segment (17) is curved and forms a circular arc centered on the geometric center (13) of the bottom (2); and
each row of orifices (10c) is situated on a respective circle centered on the geometric center (13), the diameters of the respective circles increasing from the row that is closest to the segment (17).

10. A utensil according to claim 8 or 9, characterized in that the inter-row distance and the inter-orifice distance are constant and preferably identical.

11. A utensil according to claim 8 or 9, characterized in that the number of orifices (10d) per row and per sector increases preferably uniformly with increasing distance from the geometric center (13).

12. A utensil according to claim 1, characterized in that the perforations (10) are constituted by a series of curved slots (20).

13. A utensil according to claim 12, characterized in that the curved slots (20) have their concave sides facing the geometric center (13) of the bottom (2) and they form a series of circular arcs centered on the geometric center (13) of the bottom (2).

14. A cooking utensil according to any preceding claim, characterized in that it is constituted by a cooking receptacle, in particular a pressure cooker.

15. A cooking utensil according to any preceding claim, characterized in that the metal sheet (6) is magnetized.

## Patentansprüche

1. Kochgerät mit einem wärmeleitenden Boden (2), der dafür vorgesehen ist, erwärmt zu werden, insbesondere durch Induktion, wobei der Boden (2) von innen nach außen wenigstens eine Platte (5) aus einem gut wärmeleitenden Metall und wenigstens eine Metallschicht (6) enthält, die mit Durchbrechungen (10) versehen ist, wobei die Schicht (6) in die Platte (5) so eingelassen ist, daS ihre Durchbrechungen (6) mit dem Metall der Platte gefüllt sind, dadurch gekennzeichnet, daß die Durchbrechungen (10) zusammengenommen eine Fläche aufweisen, die zwischen 5 % und 20 % der Gesamtfläche der Schicht und vorzugsweise zwischen 15 und 20 % darstellt.

2. Gerät nach Anspruch 1, dadurch gekennzeichnet, daß die Durchbrechungen (10) durch Schlitze (10a, 10b, 10c) gebildet sind, deren Fläche zusammengenommen zwischen 5 und 20 % der Gesamtfläche der Schicht und vorzugsweise zwischen 5 und 10 % darstellt.

3. Gerät nach Anspruch 2, dadurch gekennzeichnet, daß die Schlitze (10) radiale Schlitze (10a, 10b, 10c) sind und sich ausgehend von einer geometrischen Mittelzone (11) des Bodens (2) nach außen erstrecken.

4. Gerät nach Anspruch 3, dadurch gekennzeichnet, daß sich die radialen Schlitze (10a, 10b, 10c) im Abstand von der Mitte (13) der geometrischen Mittelzone (11) und bis zum Umfang (12) des Bodens (2) erstrecken.

5. Gerät nach Anspruch 4, dadurch gekennzeichnet, daß es enthält:
- eine erste Gruppe von radialen Schlitzen (10a), vorzugsweise mit einer Anzahl von acht, die in einem Abstand d1 von der geometrischen Mitte (13) enden;
- eine zweite Gruppe von radialen Schlitzen (10b), vorzugsweise mit einer Anzahl von acht, die in einem Abstand d2 von der geometrischen Mitte (13) enden, wobei sich d2 von d1 unterscheidet und sich die radialen Schlitze (10a, 10b) jeder Gruppe abwechseln.

6. Gerät nach einem der Ansprüche 3 bis 5, dadurch gekennzeichnet, daß die Durchbrechungen (10) auch eine Gruppe von vorzugsweise kreisförmigen Öffnungen (10d) enthalten, die im wesentlichen gleichmäßig zwischen den Sektoren verteilt sind, die von den radialen Schlitzen (10a, 10b, 10c) abgegrenzt sind.

7. Gerät nach Anspruch 6, dadurch gekennzeichnet, daß die Fläche der Öffnungen (10b) zusammengenommen zwischen 5 % und 10 % der Gesamtfläche der Schicht und vorzugsweise zwischen 8 und 10 % darstellt.

8. Gerät nach Anspruch 6 oder Anspruch 7, dadurch gekennzeichnet, daß es enthält:
- wenigstens drei und vorzugsweise sieben radiale Schlitze (10c), deren jeweiliges äußeres Ende (15) in einem Abstand vom Umfang (12) des Bodens (2) angeordnet ist und deren jeweiliges inneres Ende (16) ein Bein (17) bildet, das in einem Abstand von der geometrischen Mitte (13) angeordnet ist und sich im wesentlichen senkrecht zu dem radialen Abschnitt des Schlitzes erstreckt, um einen T-förmigen Schlitz zu bilden;
- wenigstens drei und vorzugsweise sechs Reihen von Öffnungen, die in jedem von zwei benachbarten radialen Schlitzen (10c) gebildeten Sektor verteilt sind, wobei jede Reihe mit einem anderen Abstand von der geometrischen Mitte (13) angeordnet ist.

9. Gerät nach Anspruch 8, dadurch gekennzeichnet, daß:
- jedes Bein (17) gekrümmt ist und einen Kreisbogen bildet, der auf die geometrische Mitte (13) des Bodens (2) zentriert ist;
- jede Reihe von Öffnungen (10c), ausgehend von der dem Bein (17) am nächsten liegenden Reihe, auf einem Kreis angeordnet ist, der auf die geometrische Mitte (13) zentriert ist und dessen Durchmesser ansteigt.

10. Gerät nach Anspruch 8 oder Anspruch 9, dadurch gekennzeichnet, daß die Abstände zwischen den Reihen und zwischen den Öffnungen konstant und vorzugsweise identisch sind.

11. Gerät nach Anspruch 8 oder Anspruch 9, dadurch gekennzeichnet, daß die Anzahl von Öffnungen (10d) je Reihe und je Sektor vorzugsweise gleichmäßig in Abhängigkeit von der Entfernung der Reihe von der geometrischen Mitte (13) ansteigt.

12. Gerät nach Anspruch 1, dadurch gekennzeichnet, daß die Durchbrechungen (10) durch eine Reihe von gekrümmten Schlitzen (20) gebildet sind.

13. Gerät nach Anspruch 12, dadurch gekennzeichnet, daß die Konkavität der gekrümmten Schlitze (20) zur geometrischen Mitte (13) des Bodens (2) gerichtet ist und daß die gekrümmten Schlitze eine Gruppe von Kreisbögen bildet, die auf die geometrische Mitte (13) des Bodens (2) zentriert sind.

14. Kochgerät nach einem der vorhergehenden Ansprüche, dadurch gekennzeichnet daß es ein Kochtopf ist, insbesondere ein Druckkochtopf.

15. Kochgerät nach einem der vorhergehenden Ansprüche, dadurch gekennzeichnet, daß die metallische Schicht (6) magnetisiert ist.
